# EUROPÄISCHE PATENTSCHRIFT

(11) **EP 0 795 047 B1**
(45) Veröffentlichungstag und Bekanntmachung des Hinweises auf die Patenterteilung: **06.05.1999**
(21) Anmeldenummer: 95938449.6
(22) Anmeldetag: 18.11.1995
(51) Int. Cl.: C25D 11/02

(54) **VERFAHREN ZUR HERSTELLUNG EINER KORROSIONS- UND VERSCHLEISSSCHÜTZENDEN OXIDSCHICHT MIT ÖRTLICH REDUZIERTER SCHICHTDICKE AUF DER METALLOBERFLÄCHE EINES WERKSTÜCKS**
PROCESS FOR PRODUCING A CORROSION AND WEAR-RESISTANT OXIDE LAYER WITH LOCALLY REDUCED LAYER THICKNESS ON THE METAL SURFACE OF A WORKPIECE
PROCEDE DE REALISATION D'UNE COUCHE D'OXYDE ANTICORROSION ET ANTI-USURE A EPAISSEUR REDUITE LOCALEMENT, SUR LA SURFACE METALLIQUE D'UNE PIECE

(30) Priorität: 01.12.1994 DE 4442792
(43) Veröffentlichungstag der Anmeldung: 17.09.1997
(73) Patentinhaber: Continental Teves AG & Co. oHG, 60488 Frankfurt (DE)
(72) Erfinder: ROTHBAUER, Horst, D-65795 Hattersheim 3 (DE); RENNER, Ewald, D-63857 Waldaschaff (DE)
(86) Internationale Anmeldenummer: EP9504544
(87) Internationale Veröffentlichungsnummer: WO9617111

(56) Entgegenhaltungen:
- US-A- 3 827 951

## Beschreibung

Verfahren zur Herstellung einer korrosions- und verschleißschützenden Oxidschicht mit örtlich reduzierter Schichtdicke auf der Metalloberfläche eines Werkstücks

Die Erfindung betrifft ein Verfahren zur Herstellung einer korrosions- und verschleißschützenden Oxidschicht mit örtlich reduzierter Schichtdicke auf der Metalloberfläche eines Werkstücks, nach dem Oberbegriff des Patentanspruchs 1 und beschreibt ferner eine Vorrichtung zur Durchführung des Verfahrens gemäß Patentanspruch 9.

Es ist bereits aus der Fachliteratur bekannt, daß zur Herstellung einer korrosions- und verschleißschützenden Oxidschicht auf der Metalloberfläche bestimmter Metall-Legierungen eine anodische Oxidation durchgeführt werden kann. Dieser Prozeß hat großtechnische Bedeutung für die Behandlung von Metalloberflächen, die auf diese Weise mit einer korrosions- und verschleißschützenden Oxidschicht überzogen werden können (vergl. hierzu Kraftfahrtechnisches Taschenbuch, Bosch, 21. Auflage). Die anodische Oxidation wird vor allem bei der Oberflächenbehandlung von Aluminiumwerkstoffen zur Verstärkung des natürlichen Oxidfilms und damit zur Erzielung sogenannter Anodisierschichten angewandt.

Die Aluminiumteile werden dabei als Anode geschaltet und zusammen mit einer Gegenelektrode in einem Elektrolyten mit einem konstanten oder pulsierendem Gleichstrom beaufschlagt. Dabei bildet sich unter Umwandlung (Oxidation) von metallischem Aluminium zu Aluminiumoxid auf der Oberfläche eine korrosions- und verschleißschützende Schicht. Der Aufbau und die Dicke der Schicht hängen im wesentlichen von der Zeit der Temperatur und der Stromdichte ab.

Die Aluminiumoxidschicht ist in der Regel sehr hart und spröde, wodurch bei entsprechender äußerer Krafteinwirkung auf die Anodisierschicht ein Abplatzen derselben nicht ausgeschlossen werden kann, was unter bestimmten Anwendungsfällen unerwünscht ist.

Es ist auch bekannt, daß durch Abdeckung mit Isolierlack oder mit Abschirmungen eine Anodisierung von speziellen Stellen eines Bauteiles verhindert oder auf ein Minimum begrenzt werden kann.

Diese Methoden sind jedoch für eine Großserienfertigung sehr aufwendig und lassen sich für den beschriebenen Anwendungsfall nicht oder nur mit großem Aufwand automatisieren.

In der US-A-3 827 951 wird ein Verfahren und eine Vorrichtung zum kontinuierlichen Herstellen eines anodischen Oxidfilmes auf einem Metallband vorgestellt, das mittels einer Rolle auf Erdpotential gelegt wird und mittels einer nicht dargestellten Stromquelle und dem zwischen der Kathode und der Rolle fließenden Strom im Elektrolyten oxidiert wird, wobei zum Vermeiden einer vorzeitigen Oxidation im Einlaufbereich eine Hilfselektrode aus Platinblech vorhanden ist.

Daher ist es die Aufgabe der Erfindung, ein Verfahren sowie eine Vorrichtung der eingangs genannten Art anzugeben, welche die beschriebenen Nachteile nicht aufweisen und die einerseits an den gewünschten Stellen der Metalloberfläche eine korrosions- und verschleißschützende Oxidschicht zulassen, andererseits jedoch an Stellen des Werkstückes, an denen unter allen Umständen ein Abplatzen der Anodisierschicht verhindert werden muß, den Aufbau einer Anodisierschicht begrenzen oder verhindern.

Diese Aufgabe wird erfindungsgemäß durch die kennzeichnenden Merkmale des Patentanspruchs 1 gelöst, wonach am Werkstück eine im Elektrolyten beständige Hilfsanode angebracht wird, an der ein auf das Werkstück einwirkende Strom partiell abgeleitet werden kann. Damit ist es möglich, die Dicke der Oxidschicht in diesem Bereich zu begrenzen oder gar zu verhindern. Mechanische Beanspruchungen, die auf die nicht-anodisierten Stellen einwirken, können somit gefahrlos aufgenommen werden. Eine Vorrichtung zur Durchführung des Verfahrens geht aus den Merkmalen des Patentanspruchs 9 hervor.

Weitere Ziele, Merkmale, Vorteile und Anwendungsmöglichkeiten der vorliegenden Erfindung ergeben sich aus der nachfolgenden Beschreibung eines Ausführungsbeispieles.

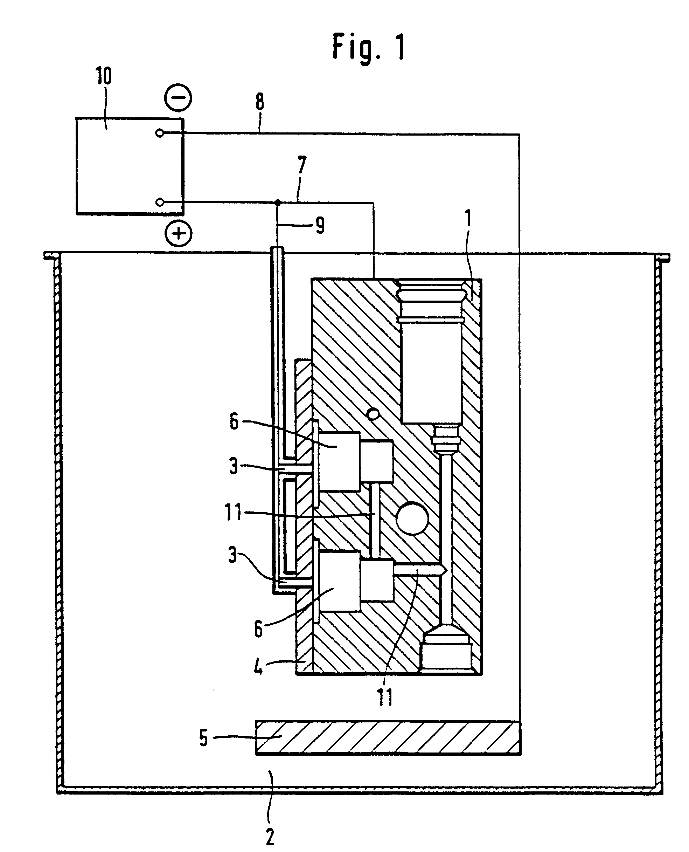

Die Fig. 1 zeigt den prinzipiellen Aufbau zur Herstellung einer korrosions- und verschleißschützenden Oxidschicht auf der Metalloberfläche eines Werkstückes 1, das in einen Anodisierungselektrolyten eingetaucht ist. Das Werkstück 1 besteht aus einer Aluminiumlegierung und ist über eine elektrische Zuleitung 7 als Pluspol (Anode) mit einer Stromquelle 10 verbunden. Die negative Elektrode (Kathode 5) besteht zum Beispiel aus einer Bleiplatte, die gleichfalls über eine elektrische Zuleitung 8 mit der Gleichstromquelle 10 verbunden ist. Das Werkstück 1 ist im Bereich der Öffnungen 6 (Ventilaufnahmebohrungen), die nicht anodisiert werden sollen, mit einer plattenförmigen Abschirmung 4 abgedeckt. Die Hilfsanoden 3 sind so an einer Abschirmung angebracht, daß sie im Bereich der Öffnungen 6 positioniert werden und sind über die elektrische Zuleitung 9 zum Anodisierstromkreis geschaltet. Sie können so den Anodisierstrom, der durch die Kanallochbohrungen 11 in die Ventilaufnahmebohrungen (Öffnungen 6) einstreut, ableiten.

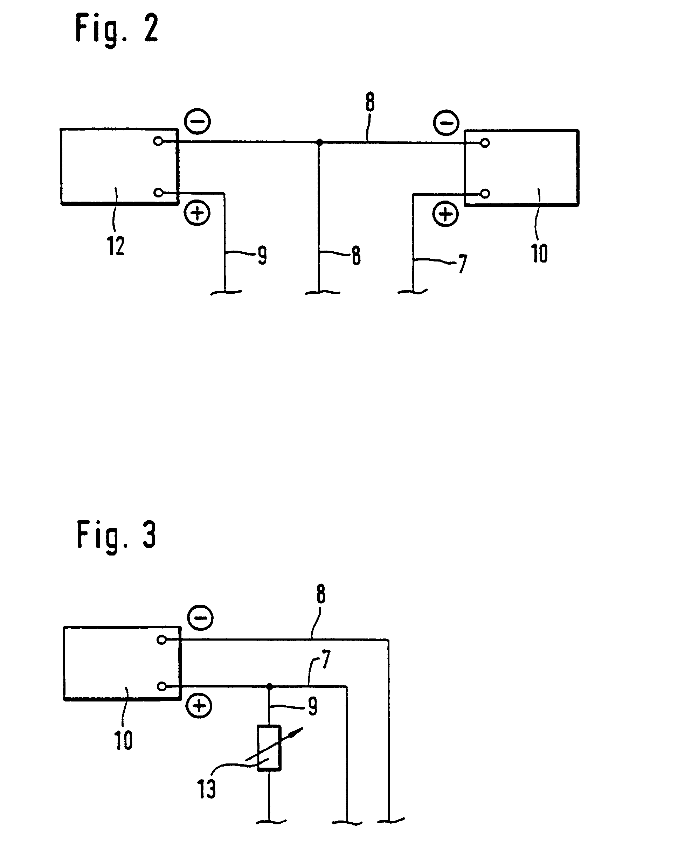

Ergänzend zu den in Figur 1 gezeigten Einzelheiten ist es jedoch auch möglich, den über die Hilfsanoden abzuleitenden Strom über einen separaten Gleichrichter 12 oder über einen variablen Widerstand 13 in der Zuleitung 9 zu regeln (siehe Figur 2 und Figur 3).

Hierzu ist der Gleichrichter 12 mit seinem Pluspol mit der zur Hilfsanode 3 führenden Zuleitung 9 verbunden, während der Minuspol des Gleichrichters 12 mit der Zuleitung 8, die an der Kathode 5 angeschlossen ist, verbunden ist.

Bei Verwendung eines veränderbaren Widerstandes 13 ist dieser zwischen dem Plupol der Stromquelle 10 und der zur Hilfsanode 3 führenden Zuleitung 9 geschaltet.

Die Hilfsanoden müssen aus einem unter anodischer Polarisation im Anodisierelektrolyt (z.B. Schwefelsäure) beständigem Material (z.B. Platin, platiniertes Titan, Graphit, leitfähiger Kunststoff) bestehen.

Das Material der Abdeckung, an der die Hilfsanoden angebracht sind, muß aus elektrisch nichtleitendem Material (z.B. Kunststoff) bestehen oder aus einem elektrisch leitendem Material, welches im Anodisierelektrolyt bei anodischer Polarisation elektrisch passiviert wird (z.B. Titan) und es muß im Anodisierelektrolyt ebenfalls beständig sein.

Die plattenförmige Abdeckung 4, die einerseits die Funktion eines die Öffnungen 6 gegenüber dem Elektrolyten 2 verschließenden Körpers übernimmt, dient andererseits auch zur Positionierung der Hilfsanoden 3 am Werkstück 1 während des Anodi-sierungsprozeßes im Elektrolyten 2. Die Hilfsanoden 3 sind somit Bestandteil der Abdeckung 4 und werden von dieser getragen. Die Kathode 5 ist vorzugsweise aus Blei- oder Aluminium ausgeführt, die gleichfalls im Anodisierelektrolyt angeordnet ist. Das Werkstück 1 bildet einen Ventilaufnahmekörper, der als monolithischer Block mehrere Kanäle und Öffnungen aufweist. Die von der Abdeckung 4 verschlossenen Öffnungen 6 des Werkstückes 1 nehmen hierbei nach vollzogener Anodisierung der Metalloberfläche mehrere mit relativ großen Einpreßkräften einzufügende Ventile auf, die in Folge der durch die Hilfsanoden 3 reduzierten Anodisierschicht abriebfrei in die Öffnungen 6 eingepreßt werden können. Etwaige Verschmutzungen der Kanäle infolge von Schichtabplatzungen werden somit verhindert. Dadurch entfallen auch die ansonsten erforderlichen Nachbearbeitungsmaßnahmen am Werkstück 1, die insbesondere spanabhebende Bearbeitung und aufwendige Spülvorgänge des gesamten Kanalsystems erfordern würden. Ein weiterer Vorteil der Erfindung ergibt sich durch die exakte Einhaltung bzw. Steuerung der Maßtoleranzen am Werkstück 1, da einerseits die für die Aufnahme von Ventilen passungsgenau gearbeiteten Öffnungen 6 nicht oder nur gering anodisiert werden, andererseits die übrige Metalloberfläche, die von einer Anodisierschicht erfaßt sind, durch die Möglichkeit zur Regelung des Anodisierstroms in ihrer Schichtdicke nach Bedarf unterschiedlich ausgebildet werden können. Die Anzahl der erforderlichen Hilfsanoden 3 richtet sich nach der Anzahl der Öffnungen 6 für die einzufügenden Ventile. Da in der Regel die Öffnungen 6 in zwei parallelen Reihen angeordnet sind, ergibt sich eine plattenförmige Abdeckung 4, mit gleichfalls daran parallel aneinandergereihten Hilfsanoden 3.

### Bezugszeichenliste

- 1: Werkstück
- 2: Elektrolyt
- 3: Hilfsanode
- 4: Abdeckung
- 5: Kathode
- 6: Öffnung
- 7,8,9: Elektrische Zuleitungen
- 10: Gleichstromquelle
- 11: Kanallochbohrung
- 12: Gleichrichter für Hilfsanoden-Stromkreis
- 13: Veränderbarer Widerstand

## Patentansprüche

1. Verfahren zur Herstellung einer korrosions- und verschleißschützenden Oxidschicht auf der Metalloberfläche eines Werkstückes (1), insbesondere für die Metalloberfläche eines Ventilaufnahmekörpers, wozu bei Verwendung einer Kathode (5) das Werkstück (1) als eine Anode in einem Elektrolyten (2) unter konstantem oder pulsierendem Gleichstrom gesetzt wird, dadurch **gekennzeichnet**, daß an einer am Werkstück (1) anlegbaren Abdeckung (4) eine im Elektrolyten (2) unter anodischer Polarisation beständige Hilfsanode (3) angebracht wird, die den Anodisierstrom an einer solchen Stelle ableitet, an der keine oder nur eine geringe Anodisierschichtdicke gefordert ist, und daß für die Abdeckung (4) ein elektrisch nicht leitendes Material oder ein elektrisch leitendes Material verwendet wird, das im Elektrolyten (2) unter anodischer Polarisation elektrisch passiviert wird.

2. Verfahren nach Anspruch 1, dadurch **gekennzeichnet**, daß die an der Metalloberfläche des Werkstückes (1) angebrachte Abdeckung (4) das Werkstück (1) im Bereich der Hilfsanoden (3) partiell abschließt.

3. Verfahren nach Anspruch 2, dadurch **gekennzeichnet**, daß die Hilfsanode (3) parallel in einen Anodenstromkreis geschaltet wird.

4. Verfahren nach Anspruch 1, dadurch **gekennzeichnet**, daß als Elektrolyt (2) Schwefelsäure verwendet wird.

5. Verfahren nach Anspruch 1, dadurch **gekennzeichnet**, daß für die Kathode eine Bleiplatte (5) verwendet wird.

6. Verfahren nach Anspruch 1, dadurch **gekennzeichnet**, daß für die Hilfsanode (3) Platin oder platiniertes Titan verwendet wird.

7. Verfahren nach Anspruch 1, **dadurch gekennzeichnet**, daß die Hilfsanode (3) in eine Öffnung (6) des Werkstückes (1) gerichtet wird, die den in die Öffnung (6) einstreuenden Anodisierstrom des im Elektrolyten (2) unter Gleichstrom stehenden Werkstückes (1) ableitet.

8. Verfahren nach Anspruch 1, dadurch **gekennzeichnet**, daß der an der Hilfsanode (3) anstehende Gleichstrom vorzugsweise durch einen Gleichrichter (12) oder einen veränderbaren Widerstand (3) regelbar ist.

9. Vorrichtung zur Durchführung des nach den Ansprüchen 1 - 8 beschriebenen Verfahrens für ein Werkstück, insbesondere für einen Ventilaufnahmekörper, dadurch **gekennzeichnet**, daß an der auf das Werkstück (1) aufsetzbaren Abdeckung (4) wenigstens eine unter anodischer Polarisation betändige Hilfsanode (3) angebracht ist, die in elektrischer Parallelschaltung zum Werkstück (1) an eine Gleichstromquelle (10) angeschlossen ist und den Anodisierstrom an einer solchen Stelle ableitet, an der keine oder nur eine geringe Anodisierschichtdicke gefordert ist, und daß die Abdeckung (4) aus elektrisch nicht leitendem Material, das im Elektrolyten (2) unter anodischer Polarisation elektrisch passiviert wird, besteht.

10. Vorrichtung nach Anspruch 9, dadurch **gekennzeichnet**, daß die Abdeckung (4) auf einer Öffnung (6) im Werkstück (1) angeordnet ist, in der sich die Hilfsanode (3) erstreckt.

11. Vorrichtung nach Anspruch 9, dadurch **gekennzeichnet**, daß die Abdeckung (4) im wesentlichen die Form einer ebenen Platte aufweist, an der die Hilfsanode (3) angebracht ist, wobei die Hilfsanode (3) mittels eines elektrischen Zuleitung (9) mit einer den Anodenstrom zum Werkstück (1) leitenden Gleichstromquelle (10) verbunden ist,

12. Vorrichtung nach Anspruch 11, dadurch **gekennzeichnet**, daß die Gleichstromquelle (10) mit einer Stromregelvorrichtung versehen ist wozu vorzugsweise ein separater Gleichrichter (12) oder veränderbarer Widerstand (13) für den Hilfsanodenstromkreis vorgesehen ist.

13. Vorrichtung nach Anspruch 11, dadurch **gekennzeichnet**, daß die Abdeckung (4), die die Hilfsanode (3) aufnimmt aus Titan ist.

## Claims

1. Method of producing a corrosion-resistant and wear-resistant oxide coating on the metal surface of a workpiece (1), more specifically, for the metal surface of a body for accepting a valve, wherein with the use of a cathode (5), the workpiece (1), as an anode, is subjected to constant or pulsating direct current in an electrolyte (2),
characterized in that an auxiliary anode (3) resistant to anodic polarization in the electrolyte (2) is attached to a cover (4) that is adapted to move into abutment on the workpiece (1), which anode (3) discharges the anodizing current at a location where no anodized coating thickness, or only a limited anodized coating thickness, is required, and in that for the cover (4) an electrically non-conductive material or an electrically conductive material is used which undergoes electrical passivation in the electrolyte (2) under anodic polarization.

2. Method as claimed in Claim 1,
characterized in that the cover (4) attached to the metal surface of the workpiece (1) partially closes the workpiece (1) in the region of the auxiliary anode (3).

3. Method as claimed in Claim 2,
characterized in that the auxiliary anode (3) is wired in parallel in an anode electric circuit.

4. Method as claimed in Claim 1,
characterized in that sulfuric acid is used as the electrolyte (2).

5. Method as claimed in Claim 1,
characterized in that a lead plate (5) is used for the cathode.

6. Method as claimed in Claim 1,
characterized in that platinum or platinized titanium is used for the auxiliary anode (3).

7. Method as claimed in Claim 1,
characterized in that the auxiliary anode (3) is directed into an opening (6) of the workpiece (1) and discharges the anodizing current, which spreads into the opening (6), of the workpiece (1) under direct current in the electrolyte (2).

8. Method as claimed in Claim 1,
characterized in that the direct current applied to the auxiliary anode (3) preferably may be controlled by means of a rectifier (12) or a variable resistor (3).

9. Device for implementing the method described in accordance with Claims 1-8 for a workpiece, more specifically, for a body to accept a valve,
characterized in that attached to the cover (4) which can be mounted on the workpiece (1) is at least one auxiliary anode (3) which is resistant to anodic polarization and is connected to a d-c source (10) in a circuit which is electrically parallel to the workpiece (1) and discharges the anodizing current at a location where no anodizing coating thickness or only a small coating thickness is required, and in that the cover (4) is made of electrically non-conductive material which undergoes electrical passivation in the electrolyte (2) under anodic polarization.

10. Device as claimed in Claim 9,
characterized in that the cover (4) is arranged on an opening (6) in the workpiece (1) in which the auxiliary anode (3) extends.

11. Device as claimed in Claim 9,
characterized in that the cover (4) has essentially the form of a level plate, to which the auxiliary anode (3) is attached, with the auxiliary anode (3) being connected by means of an electrical lead (9) to a d-c source (10) which conducts the anode current to the workpiece (1).

12. Device as claimed in Claim 11,
characterized in that the d-c source (10) includes a current-controlling device, for which it is preferred to provide a separate rectifier (12) or variable resistor (13) for the auxiliary anode electric circuit.

13. Device as claimed in Claim 11,
characterized in that the cover (4) which accepts the auxiliary anode (3) consists of titanium.

## Revendications

1. Procédé de réalisation d'une couche d'oxyde anticorrosion et anti-usure sur la surface métallique d'une pièce (1), notamment pour la surface métallique d'un corps de logement de valve, réalisation pour laquelle, lorsqu'une cathode (5) est utilisée, la pièce (1) est placée en tant qu'anode dans un électrolyte (2) sous un courant continu constant ou pulsé, caractérisé en ce qu'une anode auxiliaire (3) est montée sur un recouvrement (4) pouvant être appliqué sur la pièce (1), l'anode auxiliaire (3) étant située en permanence dans l'électrolyte (2) sous une polarisation anodique et faisant sortir le courant d'anodisation en un emplacement à l'endroit duquel aucune épaisseur de couche d'anodisation ou seulement une faible épaisseur de couche d'anodisation est nécessaire, et en ce qu'une matière qui n'est pas électriquement conductrice ou une matière électriquement conductrice est utilisée pour le recouvrement (4), laquelle matière est l'objet d'une passivation électrique dans l'électrolyte (2) sous une polarisation anodique.

2. Procédé suivant la revendication 1, caractérisé en ce que le recouvrement (4) disposé sur la surface métallique de la pièce (1) obture partiellement la pièce (1) dans la zone des anodes auxiliaires (3).

3. Procédé suivant la revendication 2, caractérisé en ce que l'anode auxiliaire (3) est connectée en parallèle dans un circuit de courant d'anode.

4. Procédé suivant la revendication 1, caractérisé en ce que l'acide sulfurique est utilisé en tant qu'électrolyte (2).

5. Procédé suivant la revendication 1, caractérisé en ce qu'une plaque de plomb (5) est utilisée pour la cathode.

6. Procédé suivant la revendication 1, caractérisé en ce que le platine ou le titane platiné est utilisé pour l'anode auxiliaire (3).

7. Procédé suivant la revendication 1, caractérisé en ce que l'anode auxiliaire (3) est dirigée dans une ouverture (6) de la pièce 1) qui sert à faire sortir le courant d'anodisation, se propageant dans l'ouverture (6), de la pièce (1) située dans l'électrolyte (2) sous un courant continu.

8. Procédé suivant la revendication 1, caractérisé en ce que le courant continu appliqué à l'anode auxiliaire (3) est de préférence réglable au moyen d'un redresseur (12) ou d'une résistance variable (13).

9. Dispositif pour la mise en oeuvre du procédé suivant les revendications 1-8 pour une pièce, notamment pour un corps de logement de valve, caractérisée en ce qu'au moins une anode auxiliaire (3) est montée sur le recouvrement (4) pouvant être appliqué sur la pièce (1), l'anode auxiliaire (3) étant située en permanence sous une polarisation anodique, étant raccordée à une source de courant continu (10) suivant un circuit électrique parallèle par rapport à la pièce (1) et servant à faire sortir le courant d'anodisation en un emplacement à l'endroit duquel aucune épaisseur de couche d'anodisation ou seulement une faible épaisseur de couche d'anodisation est nécessaire, et en ce que le recouvrement (4) est en une matière qui n'est pas électriquement conductrice et qui est l'objet d'une passivation électrique dans l'électrolyte (2) sous une polarisation anodique.

10. Dispositif suivant la revendication 9, caractérisé en ce que le recouvrement (4) est disposé sur une ouverture (6), ménagée dans la pièce (1), dans laquelle l'anode auxiliaire (3) s'étend.

11. Dispositif suivant la revendication 9, caractérisé en ce que le recouvrement (4) a essentiellement la forme d'une plaque plane sur laquelle l'anode auxiliaire (3) est montée, l'anode auxiliaire (3) étant reliée au moyen d'un conducteur d'amenée électrique (9) à une source de courant continu (10) conduisant le courant d'anode à la pièce (1).

12. Dispositif suivant la revendication 11, caractérisé en ce que la source de courant continu (10) est pourvue d'un dispositif de régulation de courant, un redresseur (12) séparé ou une résistance variable (13) étant de préférence prévu à cet effet pour le circuit de courant d'anode auxiliaire.

13. Dispositif suivant la revendication 11, caractérisé en ce que le recouvrement (4) qui reçoit l'anode auxiliaire (3) est en titane.
